# EUROPEAN PATENT APPLICATION

(11) **EP 4 322 321 A1**
(43) Date of publication of application: **14.02.2024**
(21) Application number: 22865055.2
(22) Date of filing: 31.08.2022
(51) Int. Cl.: H01M 50/591, H01M 50/586, H01M 50/531, H01M 50/178, H01M 50/249, H01M 50/579, H01M 50/105, H01M 50/59

(54) **BATTERY CELL, BATTERY MODULE, BATTERY PACK AND VEHICLE COMPRISING SAME**

(30) Priority: 01.09.2021 KR 20210116623; 14.06.2022 KR 20220072423
(71) Applicant: LG Energy Solution, Ltd., Seoul 07335 (KR)
(72) Inventor: YOON, Kyoung-Soon, Daejeon 34122 (KR); KO, Myung-Hoon, Daejeon 34122 (KR); KIM, Dong-Myung, Daejeon 34122 (KR); KIM, Seok-Je, Daejeon 34122 (KR); LEE, Seung-Byung, Daejeon 34122 (KR); LEE, Yong-Tae, Daejeon 34122 (KR); LEE, Hyun-Sang, Daejeon 34122 (KR)
(74) Representative: Plasseraud IP
(86) International application number: PCT/KR2022/013065
(87) International publication number: WO 2023/033553

(57) **Abstract**

Disclosed is a battery cell having an electrode tab with an enhanced safety, and a battery module, a battery pack and a vehicle including the same. The battery cell includes an electrode assembly including a cell body and an electrode tab provided to at least one of both sides of the cell body, a cell case configured to accommodate the electrode assembly therein, an electrode lead drawn out of the cell case by a predetermined length and connected to the electrode assembly through the electrode tab, and a tab protection module accommodated in the cell case and configured to cover at least a part of the electrode tab.

## Description

### TECHNICAL FIELD

The present disclosure relates to a battery cell, and a battery module, a battery pack and a vehicle including the same, and more particularly, to a battery cell having an electrode tab with an enhanced safety, and a battery module, a battery pack and a vehicle including the same.

The present application claims priority to Korean Patent Application No. 10-2021-0116623 filed on September 1, 2021 and Korean Patent Application No. 10-2022-0072423 filed on June 14, 2022 in the Republic of Korea, the disclosures of which are incorporated herein by reference.

### BACKGROUND ART

Secondary batteries that are easily applicable to various product groups and have electrical characteristics such as high energy density are universally used not only in portable devices, but also electric vehicles (EVs) or hybrid electric vehicles (HEVs) driven by an electric drive source. These secondary batteries are attracting attention as a new energy source for improving eco-friendliness and energy efficiency due to not only the primary advantage of dramatically reducing the use of fossil fuels but also the secondary advantage of not generating by-products from the use of energy.

The types of secondary batteries currently widely used in the art include a lithium ion battery, a lithium polymer battery, a nickel cadmium battery, a nickel hydride battery, a nickel zinc battery, and the like. The operating voltage of such a unit secondary battery cell, namely a unit battery cell, is about 2.5V to 4.5V. Therefore, when a higher output voltage than this is required, a battery pack may be configured by connecting a plurality of battery cells in series. In addition, according to the charge/discharge capacity required for the battery pack, a plurality of battery cells are connected in parallel to configure a battery pack. Accordingly, the number of battery cells included in the battery pack may be set in various ways according to a required output voltage or charge/discharge capacity.

When a battery pack is configured by connecting a plurality of battery cells in series/in parallel, in general, a battery module including at least one battery cell is configured first, and other components are added to at least one battery module to configure a battery pack.

Meanwhile, in the conventional battery cell, the periphery of an electrode tab provided to the electrode assembly connected to the electrode lead is surrounded only by the cell case without a separate protective structure, so the corresponding portion is vulnerable to an external force transmitted through the cell case or the electrode lead.

### DISCLOSURE

### Technical Problem

The present disclosure is designed to solve the problems of the related art, and therefore the present disclosure is directed to providing a battery cell having an electrode tab with an enhanced safety, and a battery module, a battery pack and a vehicle including the same.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery cell, comprising: an electrode assembly including a cell body and an electrode tab provided to at least one of both sides of the cell body; a cell case configured to accommodate the electrode assembly therein; an electrode lead drawn out of the cell case by a predetermined length and connected to the electrode assembly through the electrode tab; and a tab protection module accommodated in the cell case and configured to cover at least a part of the electrode tab.

Preferably, a coupling portion between the electrode tab and the electrode lead may be located in an inner space of the tab protection module.

Preferably, a part of the electrode tab adjacent to the coupling portion may be at least partially bent.

Preferably, the at least partially bent part of the electrode tab may be configured to be coupled to the electrode lead in a multiple-folded state.

Preferably, the tab protection module may be configured to have a shape corresponding to an inner surface of the cell case facing the tab protection module.

Preferably, the tab protection module may be configured such that at least a part thereof is in close contact with the cell body.

Preferably, the tab protection module may have a slot through which the electrode lead passes, and the slot may have a greater height than the electrode lead.

Preferably, the tab protection module may be configured to be coupled in close contact with an inner surface of the cell case facing the tab protection module.

Preferably, the cell case may include a protruding portion formed to protrude toward the electrode assembly, and the tab protection module may include a recessed portion having a shape corresponding to the protruding portion and formed to be recessed from an outer surface of the tab protection module to accommodate at least a part of the protruding portion.

Preferably, the protruding portion and the recessed portion may be formed such that outer surfaces thereof are at least partially rounded, and outer surfaces of the protruding portion and the recessed portion may have the same radius of curvature.

Preferably, the tab protection module may include a curved portion in close contact with a facing inner surface of the cell case.

Preferably, the curved portion may include a first curve formed at a front side of the tab protection module; a second curve formed on at least one of both sides of the tab protection module; and a third curve formed in a part of the tab protection module that meets the first curve and the second curve.

Preferably, the tab protection module may include a first protection cap provided to at least one side of the cell body and configured to at least partially cover an upper side of the electrode tab; and a second protection cap provided to at least one side of the cell body and connected to the first protection cap, the second protection cap being configured to at least partially cover a lower side of the electrode tab, and the first protection cap and the second protection cap may be assembled with each other in an upper and lower direction of the electrode tab to at least partially surround the electrode tab.

Preferably, the first protection cap and the second protection cap may be assembled with each other through hook-coupling, any one of the first protection cap and the second protection cap may have a fastening hook for the hook-coupling, and the other of the first protection cap and the second protection cap may have a hook groove into which the fastening hook is fitted.

Preferably, when the first protection cap and the second protection cap are coupled, the tab protection module may be configured to prevent the electrode lead from being pulled from the cell case.

Also, in another aspect of the present disclosure, there is also provided a battery cell, comprising: an electrode assembly including a cell body and an electrode tab provided to at least one of both sides of the cell body; a cell case configured to accommodate the electrode assembly therein and having a bent portion formed by bending in multiple stages in a region corresponding to the electrode tab; an electrode lead drawn out of the cell case by a predetermined length and connected to the electrode assembly through the electrode tab; and a tab protection module accommodated in the cell case and configured to cover at least a part of the electrode tab, the tab protection module being configured to be in close contact with the bent portion.

Preferably, the bent portion may include a first inclined portion configured to face the electrode tab; and a second inclined portion configured to be in close contact with the tab protection module and having a greater inclination angle than the first inclined portion based on the electrode lead.

Preferably, the bent portion may further include a connection portion configured to connect the first inclined portion and the second inclined portion to each other and to be in close contact with the tab protection module in an upper and lower direction.

Also, in another aspect of the present disclosure, there is also provided a battery module, comprising at least one battery cell according to an aspect of the present disclosure.

Also, in another aspect of the present disclosure, there is also provided a battery pack, comprising at least one battery module according to an aspect of the present disclosure.

Also, in another aspect of the present disclosure, there is also provided a vehicle, comprising at least one battery pack according to an aspect of the present disclosure.

### Advantageous Effects

According to an embodiment of the present disclosure, when an impact occurs outside the battery cell, it is possible to effectively prevent the electrode tab, which is structurally weak, from being separated from the electrode lead or damaged.

Moreover, according to various embodiments of the present disclosure, several other additional effects may be achieved. Various effects of the present disclosure will be described in detail in each embodiment, or any effects that can be easily understood by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery cell according to an embodiment of the present disclosure.
FIG. 2 is a diagram showing the battery cell of FIG. 1, viewed from the above.
FIG. 3 is a partially exploded perspective view showing the battery cell of FIG. 1.
FIG. 4 is a cross-sectional view, taken along in the line A-A' of FIG. 1.
FIG. 5 is an entire exploded perspective view of the battery cell of FIG. 1.
FIG. 6 is a cross-sectional view, taken along the line B-B' of FIG. 2.
FIG. 7 is a diagram showing a battery cell according to the second embodiment of the present disclosure.
FIG. 8 is a diagram showing the inside of the battery cell of FIG. 7, viewed from a side.
FIG. 9 is a diagram showing a battery cell according to the third embodiment of the present disclosure.
FIG. 10 is a diagram showing the inside of the battery cell of FIG. 9, viewed from a side.
FIG. 11 is a diagram showing a battery cell according to the fourth embodiment of the present disclosure.
FIG. 12 is a diagram showing the inside of the battery cell of FIG. 11, viewed from a side.
FIG. 13 is a diagram showing a battery cell according to the fifth embodiment of the present disclosure.
FIG. 14 is a diagram showing the inside of the battery cell of FIG. 13, viewed from a side.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

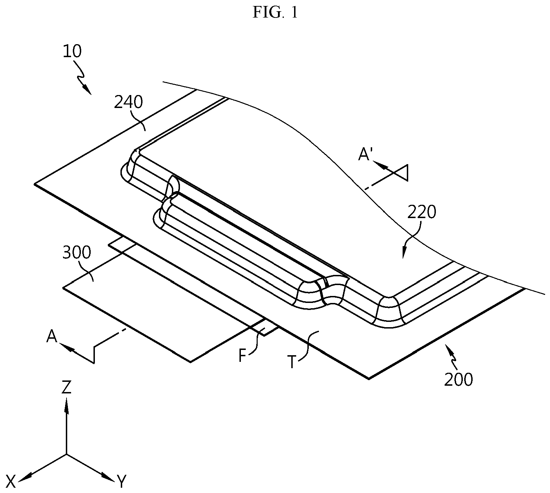

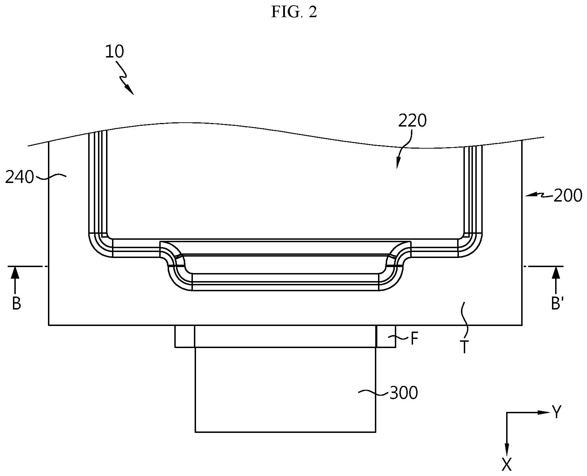

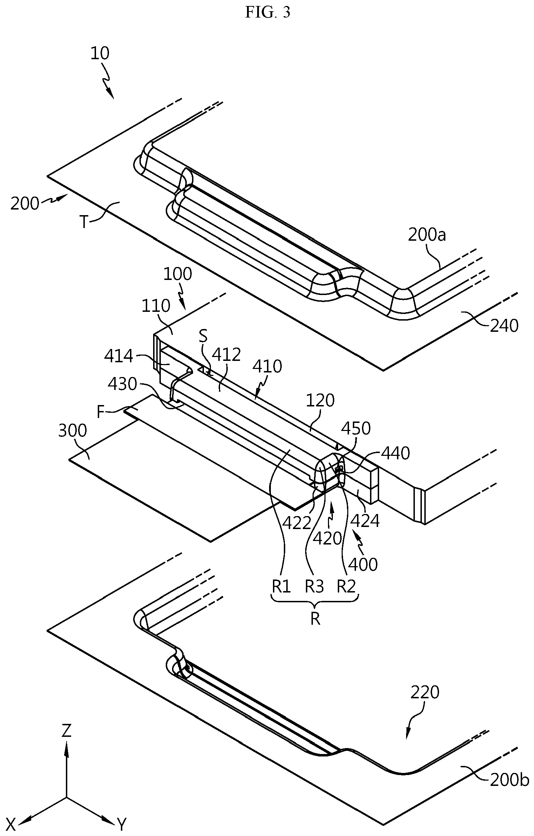

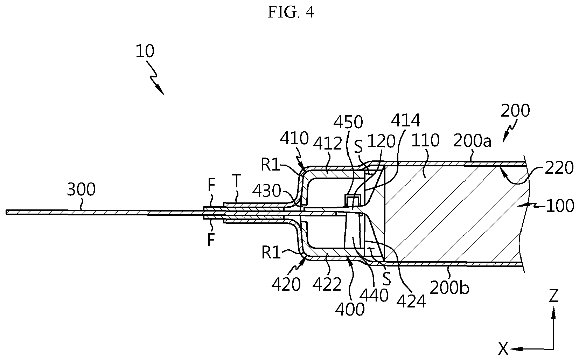

FIG. 1 is a diagram showing a battery cell 10 according to an embodiment of the present disclosure, FIG. 2 is a diagram showing the battery cell 10 of FIG. 1, viewed from the above, FIG. 3 is a partially exploded perspective view showing the battery cell 10 of FIG. 1, and FIG. 4 is a cross-sectional view, taken along in the line A-A' of FIG. 1. (In detail, FIG. 4 is a diagram showing the battery cell 10 of FIG. 1, sectioned along the XZ plane based on the line A-A'.)

In an embodiment of the present disclosure, the X-axis direction shown in the drawings may mean a longitudinal direction of the battery cell 10, the Y-axis direction may mean a left and right direction of the battery cell 10 perpendicular to the X-axis direction on the horizontal plane (XY plane), and the Z-axis direction may mean an upper and lower direction perpendicular to both the X-axis direction and the Y-axis direction.

Referring to FIGS. 1 to 4, the battery cell 10 according to an embodiment of the present disclosure may include an electrode assembly 100, a cell case 200, an electrode lead 300, and a tab protection module 400.

The battery cell 10 may mean a secondary battery. The battery cell 10 may be a pouch-type battery cell.

The electrode assembly 100 may include a cell body 110 and an electrode tab 120.

Although not shown in detail, the electrode assembly 100 may include a first electrode plate having a first polarity, a second electrode plate having a second polarity, and a separator interposed between the first electrode plate and the second electrode plate. As an example, the first electrode plate may be a positive electrode plate coated with a positive electrode active material or a negative electrode plate coated with a negative electrode active material, and the second electrode plate may correspond to an electrode plate having a polarity opposite to that of the first electrode plate.

The electrode tab 120 may be at least a part of an uncoated portion where a positive electrode active material or a negative electrode active material is not applied. The uncoated portion may be a portion protruding from the first electrode plate or the second electrode plate of the electrode assembly 100. Specifically, the electrode tab 120 may be formed by gathering portions processed by a notching process among the uncoated portion. The cell body 110 may be defined as a portion other than the electrode tab 120 in the electrode assembly 100.

Meanwhile, in the present disclosure, the electrode tab 120 is not limited to at least a part of the uncoated portion. That is, the electrode tab 120 may be separately provided and coupled to the uncoated portion.

The cell body 110 may be defined as a portion of the electrode assembly 100 other than the electrode tab 120. The electrode tab 120 may be provided to at least one of both sides of the cell body 110.

The cell case 200 may accommodate the electrode assembly 100 therein. That is, the cell case 200 may have an accommodation space for accommodating the electrode assembly 100 therein. At this time, the cell case 200 accommodates an electrolyte therein, and the cell case 200 accommodates the electrode assembly 100 in a state where the electrode assembly 100 is impregnated in the electrolyte. As an example, the cell case 200 may include a pouch film including a layer of a metal material (e.g., aluminum (Al)), but is not limited thereto.

The electrode lead 300 may be drawn out of the cell case 200 by a predetermined length. The electrode lead 300 may be provided in a pair, and the pair of electrode leads 300 may be provided to either side of the cell case 200, respectively, or may be provided to only one side, when viewed in the longitudinal direction (X-axis direction) of the battery cell 10. In addition, a lead film F for sealing the cell case 200 and the electrode lead 300 to each other may be interposed between the cell case 200 and the electrode lead 300. As an example, the lead film F may be provided as a heat-fusing film to increase the sealing force of the area of the cell case 200 where the electrode lead 300 is disposed. In addition, the lead film F may be configured to include an insulating material to prevent a short circuit of the electrode lead 300.

In addition, the electrode lead 300 may be connected to the electrode assembly 100 inside the cell case 200 through the electrode tab 120. As an example, the electrode lead 300 may be coupled to the electrode tab 120 by welding or the like.

The tab protection module 400 may be accommodated in the cell case 200 and configured to cover at least a part of the electrode tab 120. As an example, the tab protection module 400 may be configured to include an insulating material. Accordingly, it is possible to minimize the occurrence of a short circuit in the cell body 110, the electrode tab 120 and the electrode lead 300 as the tab protection module 400 comes into contact with the cell body 110, the electrode tab 120, the electrode lead 300, and the like.

Generally, the electrode tab 120 described above may have a relatively small thickness compared to the cell body 110. Therefore, the electrode tab 120 may be vulnerable to damage or separation from the electrode lead 300 when an external force is transmitted to the cell case 200.

By covering the electrode tab 120, the tab protection module 400 may receive an impact caused by an external force or the like transmitted to the cell case 200 from the outside more preferentially than the electrode tab 120.

Specifically, the tab protection module 400 may absorb an impact caused by an external force transmitted to the cell case 200 from the outside. In addition, the tab protection module 400 may be configured to disperse the impact absorbed in this way to a plurality of regions of the electrode assembly 100. Accordingly, the impact applied to the electrode tab 120 may be minimized.

In addition, the tab protection module 400 may be configured to cover at least a part of the electrode tab 120 so that a predetermined space is formed between the electrode tab 120 and the inner surface of the cell case 200. Accordingly, it is possible to minimize that an impact caused by an external force transmitted to the cell case 200 from the outside is transmitted to the electrode tab 120.

In addition, an event such as a thermal runaway phenomenon may occur in battery cell 10 as in the present disclosure. In this case, a high-temperature and high-pressure venting gas may be generated inside the cell case 200. Meanwhile, in the present disclosure, since the tab protection module 400 described above is accommodated inside the cell case 200 while forming a predetermined inner space, the volume inside the cell case 200 may be further increased, and thus it is possible to prevent the internal pressure from rapidly increasing due to the venting gas generated inside the cell case 200. Accordingly, it is possible to effectively delay the time when a certain region of the cell case 200 is damaged and the venting gas is discharged to the outside of the cell case 200.

According to this embodiment of the present disclosure, when an impact occurs outside the battery cell 10, it is possible to effectively prevent the electrode tab 120, which is structurally weak, from being separated from the electrode lead 300 and damaged.

Hereinafter, the battery cell 10 of the present disclosure will be described in more detail.

Referring to FIGS. 3 and 4, the coupling portion between the electrode tab 120 and the electrode lead 300 may be configured to be located in the inner space of the tab protection module 400.

Specifically, the entire area of the coupling portion between the electrode tab 120 and the electrode lead 300 may be configured to be located in the inner space of the tab protection module 400.

Accordingly, the damage to the electrode tab 120 may be minimized, and the connection between the electrode tab 120 and the electrode lead 300 may be stably maintained.

Referring to FIGS. 1 to 4 again, the tab protection module 400 may be configured to have a shape corresponding to the inner surface of the cell case 200 facing the tab protection module 400. According this embodiment, the tab protection module 400 may more effectively buffer the impact caused by an external force transmitted to the cell case 200 from the outside. Accordingly, the impact applied to the electrode tab 120 may be minimized. In addition, through this shape structure, the tab protection module 400 may be accommodated inside the cell case 200 without causing a shape deformation of the cell case 200.

Specifically, the cell case 200 may include an accommodation portion 220 and a sealing portion 240.

The accommodation portion 220 may be configured to accommodate the electrode assembly 100 therein.

The sealing portion 240 may have a shape extending outward by a predetermined length from the periphery of the accommodation portion 220.

Meanwhile, the cell case 200 may include a first case member 200a and a second case member 200b. Peripheral regions of the edges of the first case member 200a and the second case member 200b may come into contact with each other and be coupled by thermal fusion to form the sealing portion 240 described above. In addition, a space is formed inside the sealing portion 240 by the separation between the first case member 200a and the second case member 200b, and this space may serve as the accommodation portion 220 described above.

In addition, the sealing portion 240 may include a case terrace T. The case terrace T may refer to a region located in a direction along which the electrode lead 300 is drawn out of the cell case 200, among the entire region of the sealing portion 240.

That is, the case terrace T may be configured to extend by a predetermined length from the accommodation portion 220 and to support the electrode lead 300. At this time, it is possible to seal the electrode lead 300 and the cell case 200 to each other through the lead film F described above. Specifically, the lead film F may be interposed between the electrode lead 300 and the case terrace T.

The tab protection module 400 described above may have a shape corresponding to the inner surface of the accommodation portion 220 adjacent to the case terrace T. In this case, regions of the accommodation portion 220 and the case terrace T adjacent to each other may be structurally weak due to the shape of the bent structure or the like.

In the embodiment of the present disclosure, since the tab protection module 400 may be accommodated in the accommodation portion 220 while having a shape corresponding to the inner surface of the accommodation portion 220 adjacent to the case terrace T, the rigidity of the adjacent regions of the accommodation portion 220 and the case terrace T may be reinforced. Accordingly, the tab protection module 400 may enhance the structural rigidity of the cell case 200 further by reinforcing the rigidity of the structurally weak region in the cell case 200.

Meanwhile, in the conventional battery cell, the electrode tab and the electrode lead are configured to be coupled within a narrow space of the case terrace, but in this case, there is a problem in that the electrode tab is vulnerable to an external impact.

Meanwhile, in the battery cell 10 of the present disclosure, since the tab protection module 400 described above has a shape corresponding to the inner surface of the accommodation portion 220 adjacent to the case terrace T and is accommodated inside the cell case 200 while forming a predetermined inner space, the electrode tab 120 may be configured to have a longer length compared to the case where the tab protection module 400 is not provided inside the cell case 200. Specifically, since the electrode tab 120 is located in the inner space of the tab protection module 400, it is possible to prevent the electrode tab 120 from being damaged, and also the length of the electrode tab 120 connected to the electrode lead 300 may be configured to be longer.

In general, the length of the coupling portion between the electrode tab 120 and the electrode lead 300 (e.g., the length of the electrode tab 120 welded to the electrode lead 300 (length in the X-axis direction)) may be changed according to the length of the electrode tab 120. That is, as the length of the electrode tab 120 increases, the length of the coupling portion between the electrode tab 120 and the electrode lead 300 may increase. Moreover, as the length of the coupling portion between the electrode tab 120 and the electrode lead 300 increases, the coupling (e.g., welding) between the electrode tab 120 and the electrode lead 300 may be stronger. In this case, it is possible to reliably prevent the coupling between the electrode tab 120 and the electrode lead 300 from being released due to the external force applied to the cell case 200 or the stress from the inside of the cell case 200 caused by the venting gas generated from the inside of the cell case 200.

For example, the electrode tab of the conventional battery cell may have a length of about 9.68 mm. At this time, when the length of the electrode tab is less than 10 mm, it is found that the electrode tab is vulnerable to an external force. Meanwhile, the length of the electrode tab 120 of the battery cell 10 of the present invention may be configured within a range of approximately 11.5 mm to 12 mm. In particular, in the present disclosure, in the case of an electrode tab 120 representing a negative polarity, the length thereof may be increased by approximately 2.69 mm compared to the prior art. In addition, in the case of an electrode tab 120 representing a positive polarity, the length thereof may be increased by approximately 2.15 mm compared to the prior art. This indicates that the length of the electrode tab 120 is increased by about 15% to 20% compared to the conventional battery cell, and accordingly, the electrode tab 120 and the electrode lead 300 may be coupled stronger.

Meanwhile, according to this embodiment, the shape of the electrode tab 120 may be appropriately configured. As an example, the shape of the electrode tab 120 may be configured to have an appropriate shape so that an impact caused by an external force transmitted from the electrode lead 300 may be minimized.

In an embodiment, the tab protection module 400 may include at least one heat dissipation hole (not shown). In the tab protection module 400, the heat dissipation hole may be formed to pass through from the inner surface of the tab protection module 400 (the surface of the tab protection module 400 facing the electrode tab 120) to the outer surface of the tab protection module 400 (the surface of the tab protection module 400 facing the inner surface of the cell case 200). Through the heat dissipation hole, the tab protection module 400 may guide the heat generated inside the battery cell 10 to be transferred to the cell case 200 and discharged to the outside of the battery cell 10.

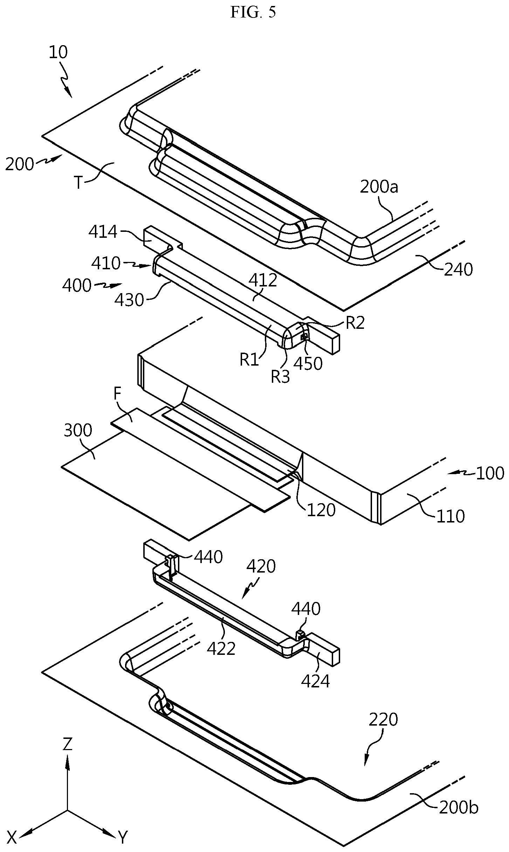

FIG. 5 is an entire exploded perspective view of the battery cell 10 of FIG. 1.

Referring to FIGS. 3 to 5, the tab protection module 400 may be provided to at least one side of the cell body 110 described above. In this state, the tab protection module 400 may at least partially cover upper and lower sides of the electrode tab 120. The tab protection module 400 may be provided to one side of the cell body 110 to cover most of the upper and lower sides of the electrode tab 120.

Specifically, the tab protection module 400 may include a first protection cap 410 and a second protection cap 420.

The first protection cap 410 may be provided to at least one side of the cell body 110. In addition, the first protection cap 410 may at least partially cover the upper side of the electrode tab 120.

The first protection cap 410 may include a first cap body 412 and a first cap wing 414.

The first cap body 412 may at least partially cover the upper side of the electrode tab 120. In addition, the first cap body 412 may be configured to have a shape corresponding to the inner surface of the cell case 200 facing the first cap body 412.

The first cap wing 414 may be configured to extend from both ends of the first cap body 412. The first cap wing 414 may be configured to cover one side of the cell body 110 at which the electrode tab 120 is not provided.

The second protection cap 420 may be provided to at least one side of the cell body 110. In addition, the second protection cap 420 is connected to the first protection cap 410 in the upper and lower direction, and may at least partially cover the lower side of the electrode tab 120.

The second protection cap 420 may include a second cap body 422 and a second cap wing 424.

The second cap body 422 may at least partially cover the lower side of the electrode tab 120. In addition, the second cap body 422 may be configured to have a shape corresponding to the inner surface of the cell case 200 facing the second cap body 422.

The second cap wing 424 may be configured to extend from both ends of the second cap body 422. The second cap wing 424 may be configured to cover one side of the cell body 110 at which the electrode tab 120 is not provided.

The first protection cap 410 and the second protection cap 420 may be assembled with each other in the upper and lower direction of the electrode tab 120 to at least partially surround the electrode tab 120. In particular, the second protection cap 420 may be coupled to the first protection cap 410 from the outside of the side of the electrode tab 120 in upper and lower directions.

Accordingly, it is possible to minimize that an impact caused by an external force transmitted through the cell case 200 from the outside is transmitted to the electrode tab 120. In addition, since an impact caused by an external force transmitted to the cell case 200 from the outside may be dispersed even in an area of the cell body 110 where the electrode tab 120 is not provided, the impact applied to the electrode tab 120 may be further minimized.

Meanwhile, referring to FIGS. 3 and 5, it is shown that the tab protection module 400 is formed symmetrically in the left and right direction with respect to the center in the left and right direction (Y-axis direction) of the battery cell 10 and is formed symmetrically in the upper and lower direction with respect to the center in the upper and lower direction (Z-axis direction) of the battery cell 10. However, this is only exemplary, and the tab protection module 400 may also be formed asymmetrically in the left and right direction, asymmetrically in the upper and lower direction, or asymmetrically in the front and rear direction as a whole..

In addition, referring to FIGS. 3 and 5, it is shown that the first cap wing 414 and the second cap wing 424 of the tab protection module 400 extend in the left and right direction (Y- axis direction) of the battery cell 10 from both ends of the first cap body 412 and the second cap body 422. However, this is only exemplary, and the first cap wing 414 and the second cap wing 424 may be formed to extend in the upper and lower direction from the first cap body 412 and the second cap body 422, respectively.

Referring to FIGS. 3 to 5, the first protection cap 410 and the second protection cap 420 may be coupled to each other through hook-coupling. Through the hook-coupling, the first protection cap 410 and the second protection cap 420 may be coupled in an easier and simpler way.

Specifically, any one of the first protection cap 410 and the second protection cap 420 may have a fastening hook 440 for the hook-coupling. In addition, the other of the first protection cap 410 and the second protection cap 420 may have a hook groove 450 into which the fastening hook 440 is fitted.

As an example, the fastening hook 440 may be formed in a pair and provided to the second protection cap 420. The pair of fastening hooks 440 may be provided to protrude from both sides of the second cap body 422 by a predetermined length.

In addition, the hook groove 450 may be formed in a pair to correspond to the fastening hook 440 and provided to the first protection cap 410. The pair of hook grooves 450 may be formed in a groove shape capable of fixing the end of the fastening hook 440 at both sides of the first cap body 412.

Meanwhile, in the tab protection module 400, the position where the fastening hook 440 and the hook groove 450 are formed is not limited to the above embodiment, and it is also possible that the fastening hook 440 is provided to the first protection cap 410 and the hook groove 450 is provided to the second protection cap 420. Also, the first protection cap 410 and the second protection cap 420 may be coupled to each other through a known snap-fit coupling method, rather than hooking.

According to this embodiment, when the first protection cap 410 and the second protection cap 420 are coupled, the tab protection module 400 may prevent the electrode lead 300 from being pulled from the cell case 200.

Referring to FIGS. 3 to 5 again, the tab protection module 400 may be configured such that at least a part thereof is in close contact with the cell body 110.

Specifically, the first cap wing 414 of the first protection cap 410 and the second cap wing 424 of the second protection cap 420 may be configured to be in close contact with one side of the cell body 110 at which the electrode tab 120 is not provided.

Accordingly, an impact caused by an external force transmitted from the outside to the cell case 200 may be more reliably dispersed to the entire cell body 110, and thus the impact applied to the electrode tab 120 may be further minimized.

Referring to FIGS. 3 and 4 again, the tab protection module 400 may further include a slot 430 through which the electrode lead 300 passes. The slot 430 may be formed at a front side of the tab protection module 400.

Specifically, when the first protection cap 410 and the second protection cap 420 are coupled to each other, if viewed from the front of the tab protection module 400, an opening of a predetermined height may be formed between the first protection cap 410 and the second protection cap 420 in the upper and lower direction. The slot 430 may correspond to the opening of a predetermined height formed when the first protection cap 410 and the second protection cap 420 are assembled in this way.

Meanwhile, the slot 430 may have a height greater than the height of the electrode lead 300. Specifically, when the electrode lead 300 is disposed to extend through the slot 430, the electrode lead 300 may be spaced apart from the upper wall and the lower wall of the tab protection module 400 in a region corresponding to the slot 430. That is, the slot 430 may have a height greater than the height of the electrode lead 300 so that, when the electrode lead 300 is disposed through the slot 430, the upper and lower surfaces of the electrode lead 300 may be spaced apart from the tab protection module 400.

According to this embodiment, when an external force is applied to the cell case 200, since the tab protection module 400 may absorb or disperse the external force without contacting the electrode lead 300, it is possible to prevent the electrode lead 300 and the electrode tab 120 coupled to the electrode lead 300 from being damaged, and it is also possible to minimize the occurrence of a short circuit between the electrode lead 300 and the electrode tab 120.

In addition, the tab protection module 400 may include slits S formed on the upper and lower sides of the tab protection module 400, as shown in FIGS. 3 and 4. The slit S may be formed when the tab protection module 400 is in close contact with the cell body 110.

Specifically, the slit S may be referred to as a space formed between the first cap body 412 and the electrode tab 120 and between the second cap body 422 and the electrode tab 120 in the longitudinal direction (X-axis direction) of the battery cell 10, when the first cap wing 414 of the first protection cap 410 and the second cap wing 424 of the second protection cap 420 are in close contact with one side of the cell body 110 not provided with the electrode tab 120. Through the slit S, the tab protection module 400 may guide the heat generated inside the battery cell 10 to be transferred to the cell case 200 and discharged to the outside of the battery cell 10.

In addition, a heat dissipation member (e.g., resin potting, not shown) may be disposed in the predetermined inner space formed by the tab protection module 400 as described above. The heat dissipation member may be configured to fill the entire space between the inner surface of the tab protection module 400 and the electrode tab 120. In this case, the tab protection module 400 may include a heat dissipation material. When the heat dissipation member is disposed in the inner space of the tab protection module 400 as described above, the slit S described above is not provided in the tab protection module 400. In addition, an injection hole (not shown) for injecting the heat dissipation member and a discharge hole (not shown) for checking whether the heat dissipation member is completely filled in the inner space of the tab protection module 400 may be provided in the upper or lower portion of the tab protection module 400.

According to this embodiment, the heat generated in the battery cell 10, particularly the heat generated in the coupling portion between the electrode tab 120 and the electrode lead 300, may be effectively discharged to the outside of the battery cell 10. In addition, since the space between the inner surface of the tab protection module 400 and the electrode tab 120 may be filled by the heat dissipation member, the stability of the coupling between the electrode tab 120 and the electrode lead 300 may be further enhanced.

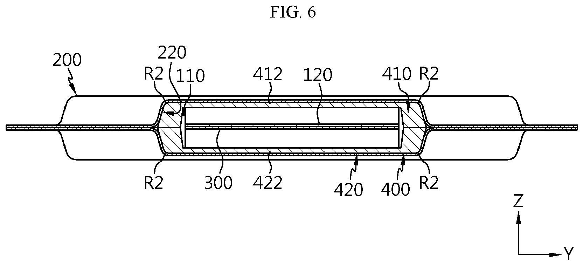

FIG. 6 is a cross-sectional view, taken along the line B-B' of FIG. 1 (in detail, FIG. 6 is a cross-sectional view showing the YZ plane of the battery cell 10 of FIG. 2, taken along the line B-B').

Referring to FIG. 6 along with FIGS. 3 and 4, the tab protection module 400 may be configured to be closely coupled to the inner surface of the facing cell case 200.

Specifically, the tab protection module 400 may be configured to be closely coupled to the inner surface of the accommodation portion 220 in which the tab protection module 400 is disposed.

For example, the first cap body 412 of the first protection cap 410 may be configured to be closely coupled to an upper inner surface of the accommodation portion 220 facing the same. In addition, the second cap body 422 of the second protection cap 420 may be configured to be closely coupled to the lower inner surface of the accommodation portion 220 facing the same.

In addition, although not shown in detail, the first cap wing 414 of the first protection cap 410 and the second cap wing 424 of the second protection cap 420 may also be configured to be closely coupled to the inner surface of the accommodation portion 220 facing the same.

As described above, since the first cap wing 414 and the second cap wing 424 are in close contact with one side of the cell body 110 where the electrode tab 120 is not provided, when the first protection cap 410 and the second protection cap 420 are coupled in the upper and lower direction, the tab protection module 400 may be configured to at least partially surround the electrode tab 120. That is, the first cap body 412 and the first cap wing 414 may surround the upper portion of the electrode tab 120, and the second cap body 422 and the second cap wing 424 may surround the lower portion of the electrode tab 120.

In this way, since the tab protection module 400 is closely coupled to the inner surface of the cell case 200, the tab protection module 400 may be stably fixed to the cell case 200. Accordingly, the tab protection module 400 may stably surround the electrode tab 120, and the first cap wing 414 and the second cap wing 424 may more stably come into close contact with the cell body 110.

According to this embodiment, the tab protection module 400 may more reliably absorb the impact caused by the external force transmitted from the outside to the cell case 200, and may disperse the impact caused by the external force to the cell case 200 and the cell body 110. Accordingly, the impact applied to the electrode tab 120 may be further minimized. In addition, it is possible to more effectively prevent the electrode tab 120 from being separated from the electrode lead 300 or damaged.

Referring to FIGS. 3, 4 and 6, the tab protection module 400 may include a curved portion R. The curved portion R may be in close contact with the inner surface of the facing cell case 200. Specifically, the curved portion R of the tab protection module 400 may have substantially the same radius of curvature as the inner surface of the accommodation portion 220 facing the same.

More specifically, the curved portion R may be formed on an edge portion of the tab protection module 400. In this case, the curved portion R may be formed on an edge portion of the first cap body 412 of the first protection cap 410 and an edge portion of the second cap body 422 of the second protection cap 420.

That is, the edge portion of the first cap body 412 and the edge portion of the second cap body 422 may be in close contact with the inner surface of the accommodation portion 220 facing the same. In addition, the edge portion of the first cap body 412 and the edge portion of the second cap body 422 may have substantially the same radius of curvature as the inner surface of the accommodation portion 220 facing the same.

Accordingly, the upper, lower and front portions of the tab protection module 400 may be fixed to the inner surface of the cell case 200 in the form of being in close contact with the inner surface of the accommodation portion 220 facing the same. That is, when the tab protection module 400 is accommodated in the cell case 200, the tab protection module 400 may be strongly fixed to the inner surface of the cell case 200, and accordingly, the occurrence of a dead space between the inner surface of the cell case 200 and the outer surface of the tab protection module 400 may be prevented.

According to this embodiment, the tab protection module 400 may be more stably fixed to the cell case 200. Accordingly, the tab protection module 400 may more reliably absorb the impact caused by the external force transmitted from the outside to the cell case 200 and may distribute the impact caused by the external force to the cell case 200 and the cell body 110. Moreover, it is possible to further minimize the impact applied to the electrode tab 120. In addition, it is possible to more effectively prevent the electrode tab 120 from being damaged or separated from the electrode lead 300.

In particular, the curved portion R may include a first curve R1, a second curve R2, and a third curve R3.

The first curve R1 may be formed on the front side (side in the X-axis direction) of the tab protection module 400. Specifically, the first curve R1 may be formed on the front edge portion of the tab protection module 400. As an example, the first curve R1 may be formed on the front edge portion of the first cap body 412. Also, the first curve R1 may be formed on the front edge portion of the second cap body 422.

The second curve R2 may be formed on at least one side of both sides (sides in the Y-axis direction) of the tab protection module 400. Specifically, the second curve R2 may be formed on an edge portion of at least one of both sides of the tab protection module 400. As an example, the second curve R2 may be formed on an edge portion of at least one of both sides of the first cap body 412. Also, the second curve R2 may be formed on an edge portion of at least one of both sides of the second cap body 422.

The third curve R3 may be formed in a portion of the tab protection module 400 where the first curve R1 and the second curve R2 meet. As an example, the third curve R3 may be formed in a portion of the first cap body 412 where the first curve R1 and the second curve R2 meet. Also, the third curve R3 may be formed in a portion of the second cap body 422 where the first curve R1 and the second curve R2 meet.

The first curve R1, the second curve R2, and the third curve R3 may be in close contact with the inner surface of the accommodation portion 220 facing the same, respectively. That is, each of the first curve R1, the second curve R2, and the third curve R3 may have substantially the same radius of curvature as the inner surface of the accommodation portion 220 facing the same, respectively.

According to this embodiment, since the curved portion R formed along the circumferential direction of the edge of the tab protection module 400 is in close contact with the inner surface of the facing cell case 200, the tab protection module 400 may be more stably fixed to the cell case 200.

Accordingly, impact absorption and dispersion by the tab protection module 400 may be made more reliably, and damage to the electrode tab 120 and the release of coupling between the electrode tab 120 and the electrode lead 300 may be more reliably prevented.

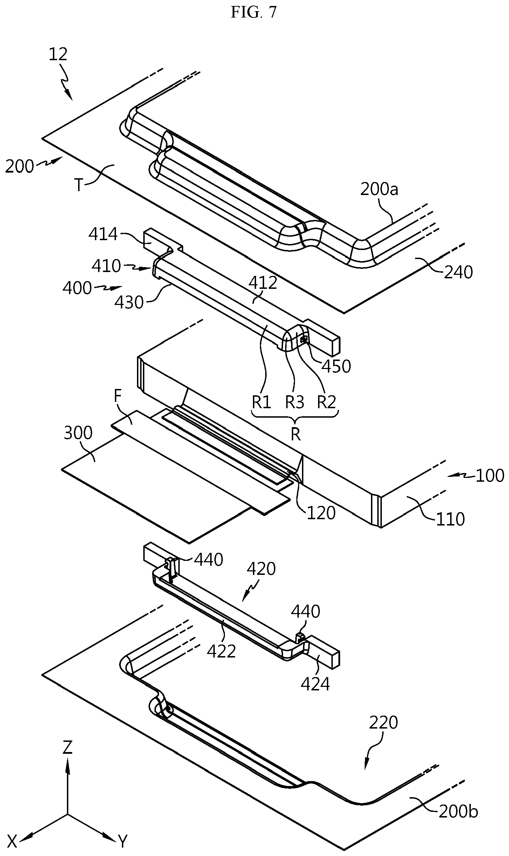

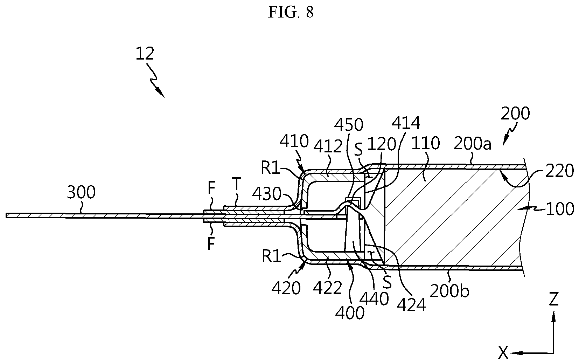

FIG. 7 is a diagram showing a battery cell 12 according to the second embodiment of the present disclosure, and FIG. 8 is a diagram showing the inside of the battery cell 12 of FIG. 7, viewed from a side.

Since the battery cell 12 according to this embodiment is similar to the battery cell 10 of the former embodiment, components substantially identical or similar to those of the former embodiment will not be described again, and features different from those of the former embodiment will be described in detail.

In the battery cell 12 according to this embodiment, since the electrode tab 120 is located in the inner space of the tab protection module 400, the length of the electrode tab 120 coupled to the electrode lead 300 may be configured to be longer. That is, the shape of the electrode tab 120 may be configured to have an appropriate shape so that an impact caused by an external force transmitted from the electrode lead 300 may be minimized.

As an example, in the battery cell 12 according to this embodiment, as shown in FIGS. 7 and 8, the electrode tab 120 may be configured to be bent at least partially to further increase the length of the electrode tab 120. More specifically, the portion of the electrode tab 120 adjacent to the coupling portion between the electrode tab 120 and the electrode lead 300 may be configured to be bent at least partially.

At least a partially bent portion of the electrode tab 120 may buffer an impact caused by an external force transmitted from the electrode lead 300 to the electrode tab 120 or a stress generated by the venting gas and transmitted to the electrode tab 120 from the inside of the cell case 200. That is, in the battery cell 12 according to this embodiment, the length of the electrode tab 120 is increased by the bending configuration, so that the coupling between the electrode tab 120 and the electrode lead 300 may be strengthened, and the impact transferred to the electrode tab 120 may also be relieved.

According to this embodiment, an impact caused by an external force transmitted from the electrode lead 300 to the electrode tab 120 and/or a stress transmitted from the inside of the cell case 200 to the electrode tab 120 may be further minimized, and the structural rigidity of the electrode tab 120 may be strengthened.

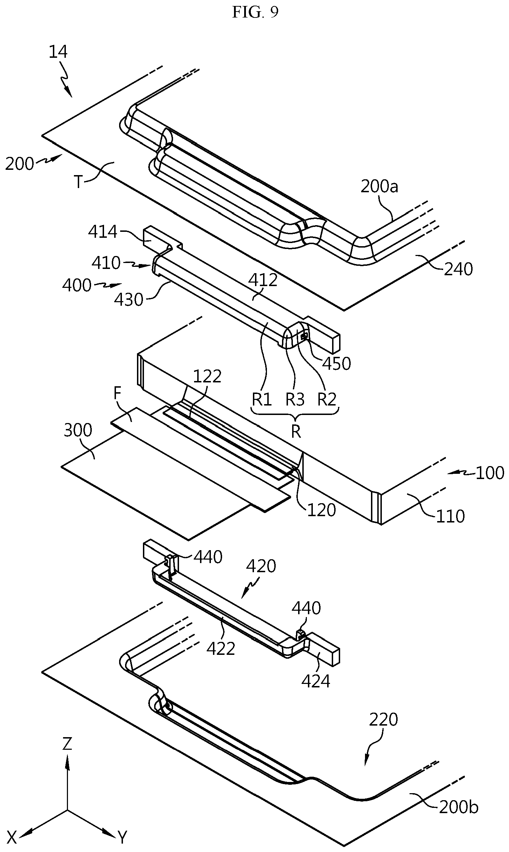

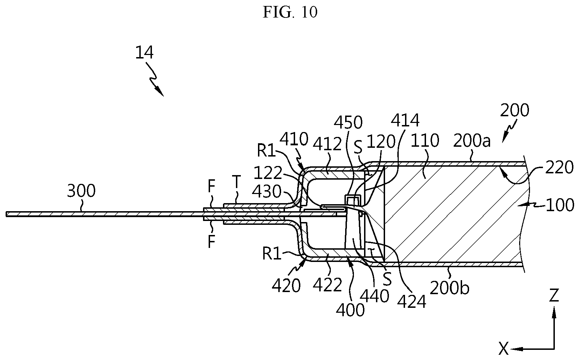

FIG. 9 is a diagram showing a battery cell 14 according to the third embodiment of the present disclosure, and FIG. 10 is a diagram showing the inside of the battery cell 14 of FIG. 9, viewed from a side.

Since the battery cell 14 according to this embodiment is similar to the battery cell 10 of the former embodiment, components substantially identical or similar to those of the former embodiment will not be described again, and features different from those of the former embodiment will be described in detail.

In the battery cell 14 according to this embodiment, since the electrode tab 120 is located in the inner space of the tab protection module 400, the length of the electrode tab 120 connected to the electrode lead 300 may be configured to be longer. That is, the shape of the electrode tab 120 may be configured to have an appropriate shape so that an impact caused by the external force transmitted from the electrode lead 300 may be minimized.

As an example, in the battery cell 14 according to this embodiment, as shown in FIGS. 9 and 10, a part of the electrode tab 120 may be configured in a multiple-folded state. More specifically, at least a partial bent portion of the electrode tab 120 may be configured to be coupled to the electrode lead 300 in a multiple-folded state. In this case, the part of the electrode tab 120 coupled to the electrode lead 300 may be exemplarily denoted by reference numeral '122' in FIGS. 9 and 10.

Specifically, in at least a partial bent portion of the electrode tab 120 coupled to the electrode lead 300, the plurality of folded portions 122 may be configured to be in surface contact with each other in the upper and lower direction.

According to this embodiment, an impact caused by an external force transmitted from the electrode lead 300 to the electrode tab 120 and/or a stress transmitted from the inside of the cell case 200 to the electrode tab 120 may be further minimized, and the structural rigidity of the electrode tab 120 may be strengthened. In addition, the coupling between the electrode lead 300 and the electrode tab 120 may be more stably maintained.

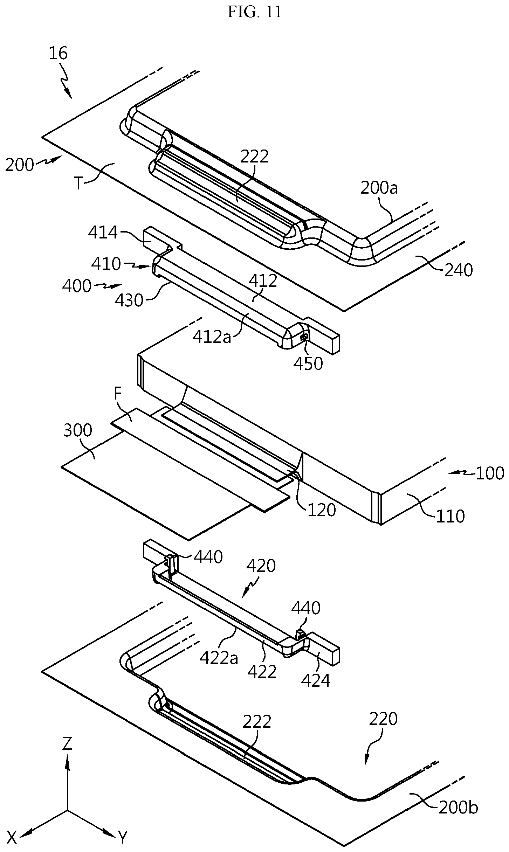

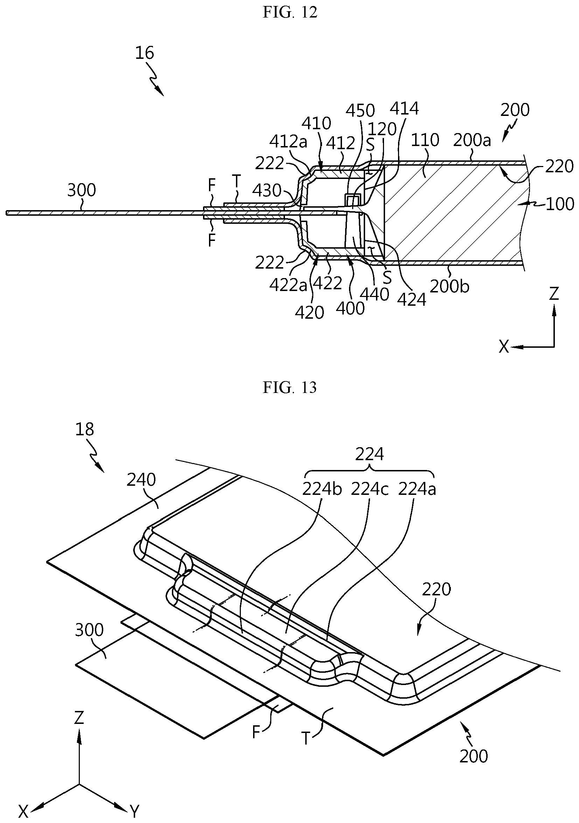

FIG. 11 is a diagram showing a battery cell 16 according to the fourth embodiment of the present disclosure, and FIG. 12 is a diagram showing the inside of the battery cell 16 of FIG. 11, viewed from a side.

Since the battery cell 16 according to this embodiment is similar to the battery cell 10 of the former embodiment, components substantially identical or similar to those of the former embodiment will not be described again, and features different from those of the former embodiment will be described in detail.

Referring to FIGS. 11 and 12, in the battery cell 16 according to this embodiment, the tab protection module 400 may be configured to be coupled in close contact with the inner surface of the cell case 200 facing the tab protection module 400.

In particular, in the battery cell 16 of this embodiment, the cell case 200 may include a protruding portion 222. The protruding portion 222 may be formed to protrude toward the electrode assembly 100 by a predetermined length from the inner surface of the cell case 200. Specifically, the protruding portion 222 may be formed to protrude toward the electrode assembly 100 by a predetermined length from the inner surface of the accommodation portion 220. The protruding portion 222 may be provided in the accommodation portion 220 described above. In particular, the protruding portion 222 may be provided in an area of the accommodation portion 220 adjacent to the case terrace T. In addition, the protruding portion 222 may be formed to be more convex than the inner surface of the accommodation portion 220. As an example, the protruding portion 222 may be formed by a forming mold.

The tab protection module 400 may include recessed portions 412a, 422a.

The recessed portions 412a, 422a may have a shape corresponding to the protruding portion 222 and may be formed by being recessed from the outer surface of the tab protection module 400 by a predetermined depth. The recessed portions 412a, 422a may have a concave shape. In particular, the recessed portions 412a, 422a may be provided to the edge portions of the first protection cap 410 and the second protection cap 420, respectively. In addition, the recessed portions 412a, 422a may be configured to accommodate at least a part of the protruding portion 222. The recessed portions 412a, 422a may be provided to the first cap body 412 and the second cap body 422 described above.

The protruding portion 222 and the recessed portions 412a, 422a may be in close contact with each other as shown in FIG. 12. Accordingly, the tab protection module 400 and the inner surface of the cell case 200 may more reliably absorb the impact caused by the external force. Accordingly, the impact applied to the electrode tab 120 may be further minimized. In addition, the tab protection module 400 may be stably fixed to the cell case 200 as the cell case 200 and the tab protection module 400 are coupled with each other. Accordingly, the electrode tab 120 may be more stably protected.

In particular, the protruding portion 222 and the recessed portions 412a, 422a may be formed so that at least a part of the outer surfaces thereof is rounded. That is, the outer surfaces of the protruding portion 222 and the recessed portions 412a, 422a may be configured to have a predetermined radius of curvature. In particular, the outer surfaces of the protruding portion 222 and the recessed portions 412a, 422a may have the same radius of curvature to come into close contact with each other.

According to this embodiment, while stably protecting the electrode tab 120, it is possible to minimize damage to the coupling portion of the cell case 200 and the tab protection module 400. In addition, as the tab protection module 400 is more stably coupled to the cell case 200, damage to the electrode tab 120 may be more reliably prevented.

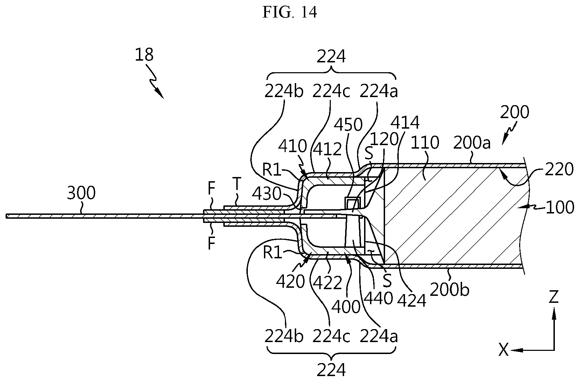

FIG. 13 is a diagram showing a battery cell 18 according to the fifth embodiment of the present disclosure, and FIG. 14 is a diagram showing the inside of the battery cell 18 of FIG. 13, viewed from a side.

Since the battery cell 18 according to this embodiment is similar to the battery cell 10 of the former embodiment, components substantially identical or similar to those of the former embodiment will not be described again, and features different from those of the former embodiment will be described in detail.

Referring to FIGS. 13 and 14, in the battery cell 18, the cell case 200 may include a bent portion 224 formed by bending in multiple stages.

The bent portion 224 may be formed in a region of the accommodation portion 220 in which the tab protection module 400 is disposed. Also, the bent portion 224 may be formed in a region of the accommodation portion 220 corresponding to the electrode tab 120.

The bent portion 224 may be formed by a forming mold. As an example, the region of the bent portion 224 corresponding to the curve formed by bending in multiple stages may be configured to have a predetermined radius of curvature.

Meanwhile, the tab protection module 400 may be configured to be in close contact with the bent portion 224. Specifically, the first cap body 412 of the first protection cap 410 may be in close contact with the bent portion 224 of the accommodation portion 220 facing the same. In addition, the second cap body 422 of the second protection cap 420 may be in close contact with the bent portion 224 of the accommodation portion 220 facing the same.

As such, according to the battery cell 18 of this embodiment, since a part of the cell case 200 may be formed by being bent in multiple stages, the impact transmitted to the cell case 200 through the bent portion may be alleviated. In addition, since the tab protection module 400 may come into close contact with the region of the cell case 200 bent in multiple stages as described above, the tab protection module 400 may be more stably fixed to the cell case 200, and the tab protection module 400 may more reliably absorb the impact caused by the external force applied to the cell case 200 from the outside.

Referring to FIGS. 13 and 14 again, the bent portion 224 may include a first inclined portion 224a and a second inclined portion 224b.

The first inclined portion 224a may be configured to face the electrode tab 120. At this time, the first inclined portion 224a may be spaced apart from the electrode tab 120 in the longitudinal direction (X-axis direction) of the battery cell 10.

The second inclined portion 224b may be configured to be in close contact with the tab protection module 400. In addition, the second inclined portion 224b may have a larger inclination angle than the first inclined portion 224a with respect to the electrode lead 300. In addition, the second inclined portion 224b may correspond to a region of the accommodation portion 220 connected to the case terrace T.

That is, the slope of the first inclined portion 224a facing the electrode tab 120 may be more gentle than the slope of the second inclined portion 224b facing the tab protection module 400. At this time, the curved portion R of the tab protection module 400 may have substantially the same radius of curvature as the inner surface of the facing cell case 200. As an example, as shown in FIG. 14, the first curve R1 of the tab protection module 400 may be in close contact with the inner surface of the accommodation portion 220 facing the same.

Accordingly, the tab protection module 400 may be in close contact with the second inclined portion 224b adjacent to the electrode lead 300 to absorb the impact caused by the external force applied to the cell case 200 as much as possible. In addition, since the first inclined portion 224a adjacent to the electrode tab 120 may be spaced apart from the electrode tab 120 while having a predetermined inclination angle, the transmission of external force to the electrode tab 120 may be minimized.

In addition, the bent portion 224 may further include a connection portion 224c. The connection portion 224c may be configured to connect the first inclined portion 224a and the second inclined portion 224b to each other and to be in close contact with the tab protection module 400 in upper and lower direction.

More specifically, the connection portion 224c may be formed to extend in the longitudinal direction (X-axis direction) of the battery cell 10. In addition, the connection portion 224c may be in close contact with the upper portion of the first cap body 412 and the lower portion of the second cap body 422 of the tab protection module 400.

According to this embodiment, while minimizing direct contact of the cell case 200 with the electrode tab 120, the tab protection module 400 may be more stably fixed to the cell case 200.

In addition, one or more battery cells 10, 12, 14, 16, 18 according to the present disclosure may be provided to constitute a battery module. That is, the battery module according to the present disclosure may include one or more battery cells 10, 12, 14, 16, 18 according to the present disclosure. Specifically, one or more battery cells 10, 12, 14, 16, 18 may constitute a cell assembly, and the cell assembly may be accommodated in a module case.

In addition, at least one battery module according to the present disclosure may be provided to configure the battery pack. That is, the battery pack according to the present disclosure may include at least one battery module according to the present disclosure. In addition, the battery pack may further include a pack case for accommodating the battery module therein and various devices for controlling the charging and discharging of the battery pack, for example a battery management system (BMS), a current sensor and a fuse.

In addition, the battery pack according to the present disclosure may be applied to a vehicle, such as an electric vehicle. That is, the vehicle according to the present disclosure may include at least one battery pack according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Meanwhile, even though the terms indicating directions such as "upper", "lower", "left", "right", "front" and "rear" are used herein, these terms are selected just for convenience of description only, and it is obvious to those skilled in the art that these terms may change depending on the position of the stated element or an observer.

## Claims

1. A battery cell, comprising:
an electrode assembly including a cell body and an electrode tab provided to at least one of both sides of the cell body;
a cell case configured to accommodate the electrode assembly therein;
an electrode lead drawn out of the cell case by a predetermined length and connected to the electrode assembly through the electrode tab; and
a tab protection module accommodated in the cell case and configured to cover at least a part of the electrode tab.

2. The battery cell according to claim 1,
wherein a coupling portion between the electrode tab and the electrode lead is located in an inner space of the tab protection module.

3. The battery cell according to claim 2,
wherein a part of the electrode tab adj acent to the coupling portion is at least partially bent.

4. The battery cell according to claim 3,
wherein the at least partially bent part of the electrode tab is configured to be coupled to the electrode lead in a multiple-folded state.

5. The battery cell according to claim 1,
wherein the tab protection module is configured to have a shape corresponding to an inner surface of the cell case facing the tab protection module.

6. The battery cell according to claim 1,
wherein the tab protection module is configured such that at least a part thereof is in close contact with the cell body.

7. The battery cell according to claim 1,
wherein the tab protection module has a slot through which the electrode lead passes, and
the slot has a greater height than the electrode lead.

8. The battery cell according to claim 1,
wherein the tab protection module is configured to be coupled in close contact with an inner surface of the cell case facing the tab protection module.

9. The battery cell according to claim 8,
wherein the cell case includes a protruding portion formed to protrude toward the electrode assembly, and
the tab protection module includes a recessed portion having a shape corresponding to the protruding portion and formed to be recessed from an outer surface of the tab protection module to accommodate at least a part of the protruding portion.

10. The battery cell according to claim 9,
wherein the protruding portion and the recessed portion are formed such that outer surfaces thereof are at least partially rounded, and
outer surfaces of the protruding portion and the recessed portion have the same radius of curvature.

11. The battery cell according to claim 8,
wherein the tab protection module includes a curved portion in close contact with a facing inner surface of the cell case.

12. The battery cell according to claim 11,
wherein the curved portion includes:
a first curve formed at a front side of the tab protection module;
a second curve formed on at least one of both sides of the tab protection module; and
a third curve formed in a part of the tab protection module that meets the first curve and the second curve.

13. The battery cell according to claim 1,
wherein the tab protection module includes:
a first protection cap provided to at least one side of the cell body and configured to at least partially cover an upper side of the electrode tab; and
a second protection cap provided to at least one side of the cell body and connected to the first protection cap, the second protection cap being configured to at least partially cover a lower side of the electrode tab,
wherein the first protection cap and the second protection cap are assembled with each other in an upper and lower direction of the electrode tab to at least partially surround the electrode tab.

14. The battery cell according to claim 13,
wherein the first protection cap and the second protection cap are assembled with each other through hook-coupling,
any one of the first protection cap and the second protection cap has a fastening hook for the hook-coupling, and
the other of the first protection cap and the second protection cap has a hook groove into which the fastening hook is fitted.

15. The battery cell according to claim 13,
wherein when the first protection cap and the second protection cap are coupled, the tab protection module is configured to prevent the electrode lead from being pulled from the cell case.

16. A battery cell, comprising:
an electrode assembly including a cell body and an electrode tab provided to at least one of both sides of the cell body;
a cell case configured to accommodate the electrode assembly therein and having a bent portion formed by bending in multiple stages in a region corresponding to the electrode tab;
an electrode lead drawn out of the cell case by a predetermined length and connected to the electrode assembly through the electrode tab; and
a tab protection module accommodated in the cell case and configured to cover at least a part of the electrode tab, the tab protection module being configured to be in close contact with the bent portion.

17. The battery cell according to claim 16,
wherein the bent portion includes:
a first inclined portion configured to face the electrode tab; and
a second inclined portion configured to be in close contact with the tab protection module and having a greater inclination angle than the first inclined portion based on the electrode lead.

18. The battery cell according to claim 17,
wherein the bent portion further includes a connection portion configured to connect the first inclined portion and the second inclined portion to each other and to be in close contact with the tab protection module in an upper and lower direction.

19. A battery module, comprising at least one battery cell according to any one of claims 1 to 18.

20. A battery pack, comprising at least one battery module according to claim 19.

21. A vehicle, comprising at least one battery pack according to claim 20.
